# EUROPEAN PATENT SPECIFICATION

(11) **EP 2 618 105 B1**
(45) Date of publication and mention of the grant of the patent: **19.03.2014**
(21) Application number: 12151947.4
(22) Date of filing: 20.01.2012
(51) Int. Cl.: G01C 15/00, G06F 3/048

(54) **Handheld field device having a sketching functionality with a prearranged set of vector orientations**
Tragbare Feldvorrichtung mit Skizzierfunktion mit einem im Voraus angeordneten Satz von Vektorausrichtungen
Dispositif de terrain portable doté d'une fonctionnalité de dessin avec un ensemble prédéfini d'orientations de vecteur

(43) Date of publication of application: 24.07.2013
(73) Proprietor: Leica Geosystems AG, 9435 Heerbrugg (CH)
(72) Inventor: Singleton, Jr., Carl W., Braselton, Jackson county, GA Georgia 30517 (US); Zimmermann, Jan, CH-9037 Speicherschwendi (CH); Möller, Bernd, CH-9450 Lüchingen (CH)
(74) Representative: Kaminski Harmann

(56) References cited:
- US-A1- 2005 140 677

## Description

The present invention pertains to a method for blueprint data entry and display using a handheld field device, and a handheld field device for execution of said method.

Blueprints have long been used for the provision of information for use at construction sites. Prior to the introduction of portable electronic calculators and instruments, the use of the blueprint information in the field typically involved hand calculations and reference tables, and the information was only available as hard copy on a construction site.

The adoption of handheld calculators and electronic surveying instruments has provided an electronic storage medium for information that has augmented the traditional blueprint. In using a combination of electronic and hard copy information sources, there is frequently a requirement for transferring information from one medium to the other.

The transfer of electronic information to hard copy can be achieved by simply formatting and printing out the information stored in the electronic medium. This process requires minimal effort on the part of a human user. However, the transfer of information in blueprint to an electronic instrument requires more effort, particularly if the electronic instrument is a handheld field device. Input and output capabilities of the device are generally limited by its size.

A handheld device for blueprint entry is disclosed for example in EP 1 700 227 Bl. In this document a handheld device comprising a touchscreen and/or keys is disclosed that is used to sequentially enter line segments to enter blueprint data into the device. Each line segment that is entered may be referenced to an existing endpoint or start point of a previously entered line segment. A single line segment may be repeated without re-entering its parameters.

With this solution, however, for changing the direction of a line segment the user must either enter angle values on a keypad or use keys on a toolbar. This tapping of keys on a toolbar allows only single incremental changes to the direction of a line segment. Thus, the user, depending on the change of direction has to tap on these keys a couple of times. If, for example, the angle-increments were set to 30° and the directional arrow were at an azimuth of 0°, it would take the user eight taps on a directional button to reach 180°. Unnecessary taps, however, consume time and increase the chance that input errors occur.

Additionally, the control according to the solution of EP 1 700 227 B1 is not always very intuitive. If the user, for instance, is creating points in a downward direction on the touchscreen, tapping the turn left button changes the directional arrow on the map screen to the right and vice-versa. This, again, might produce input errors, which consume time, frustrate the user and, if the error remains undetected, may lead to errors in the final blueprint.

It is therefore an object of the present invention to provide a handheld field device with a sketching functionality that allows setting line segments or points more intuitively and with fewer input commands, i.e. taps or clicks, in particular with a single command. This object is achieved by the handheld field device according to Claim 1, the method for blueprint data entry and display according to Claim 12 and/or the dependent claims of the present invention.

According to the present invention, instead of having to tap or click on several keys of a toolbar of a graphical user interface, the operator is enabled to change the direction of a line segment by tapping or clicking only once and directly on that part of the interface, on which the line segments are displayed.

According to the invention a handheld field device for use with outdoor application equipment for measuring and/or surveying, such as tachymeters or theodolites, is adapted for entry and display of blueprint data. The device comprises a graphical user interface for providing line segment data entry fields and for displaying input line segments, and a storing and calculation unit adapted for accepting, storing and editing line segment data associated with said input line segments. The line segment data comprises at least a starting point, an orientation and a length of each line segment. The graphical user interface provides a defined orientation selection area, comprising a multitude of orientation selection fields for entry of an orientation of a line segment, wherein each of the orientation selection fields is assigned to a pre-defined orientation. Preferably, the handheld field device is equipped with a touchscreen on which the graphical user interface can be displayed.

The solution of the present invention allows a user to change a line or segment direction to a new azimuth by tapping or clicking on a graphical user interface in a 360° area around a selected starting point.

The graphical user interface comprises a multitude of selectable display points. On the graphical user interface around a starting point - or any selected point - a virtual orientation selection area is provided, which is divided into a multitude of orientation selection fields. Selecting one of these fields - e.g. by clicking or (in case of a touchscreen) by tapping on a selectable display point lying within the field - is understood by the system as selecting a certain orientation for a new line segment.

Preferably, this orientation can be symbolized by a directional arrow representing the proposed line and/or the direction to the next point, which the user is about to create.

The length of the directional arrow preferably represents the distance to the next point and can be determined by a user by means of an input field. The length of the arrow then is a visual check for the user to reassure him that the dimensions have been entered correctly. The user also can choose whether or not to create a line from the selected point to a proposed point. Optionally, for this choice a check box can be provided, which the user can mark with a cross or tick. This choice is represented visually on the directional arrow: for example by differently coloured arrows or by a solid arrow line for the creation of a line segment and a dashed arrow line for the creation of a point only. Preferably, also a multiplication functionality can be provided - for instance by a button or menu - allowing the user to create a multitude of equally sized line segments in a row, thus further decreasing the number of necessary taps.

Another advantage of the solution of the present invention shows, when the user creates points on the screen in a downward direction, as no confusing incremental turn keys need to be used; instead the user simply taps on the new direction to create new points. The user does not need to be concerned if the direction of the line segments is upwards or downwards on the screen.

For easier entry of line segment data the orientation selection fields can be displayed or indicated to the user. This can be achieved by displaying the fields' borders, by displaying orientation indicators, for example arrows, which are displayed in each field, or by displaying a vector selection element with vectors representing the orientation selection fields.

In a preferred embodiment of the invention, in the graphical user interface on the orientation selection area around the selected point a figure is displayed as a vector selection element. Therein, from a selected point a multitude of vectors is drawn in an outward direction. The number of vectors - for instance four, eight or twelve vectors - preferably can be selected by the user and determines the angle between the vectors - for instance 90°, 45° or 30°. On the display these vectors are preferably very lightly drawn or transparent and do not go to infinity but to a defined length away from the selected centre point.

The length of the vectors roughly indicates the size of the orientation selection area. The orientation selection area is divided into as many orientation selection fields as there are vectors. Each orientation selection field has the shape of a circle sector and is divided into two equally sized parts by one of the vectors. Selecting one of the fields around a vector is interpreted as selecting the corresponding vector as orientation for a new line segment. Thus, a user can tap or click on or near any of the displayed vectors to change the azimuth of the directional arrow.

Commands might be entered either by moving a cursor with a mouse or touchpad of the device to an entry field and then clicking on it, or by tapping on it with a finger or pointing tool on a touchscreen of the device. Also key buttons of the handheld device can be used to enter commands. It is even perceivable to execute oral commands of the user using a voice input and speech recognition.

Preferably, the angle value can be updated with the use of an inertial sensor. Changing the orientation of the handheld device, i. e. turning it around, then could change the orientations on the screen. Optionally, certain movements could perform other tasks, for example shaking the handheld device could be interpreted as storing of a point.

The invention in the following will be described in detail by referring to exemplary embodiments that are accompanied by figures, in which:
Fig. 1a shows a rugged handheld field device according to the invention;
Fig. 1b shows the use of the handheld field device in combination with measuring and/or surveying equipment on a construction site;
Figs. 2a-d show the touchscreen of a handheld field device displaying a graphical user interface with orientation selection fields;
Fig. 3 shows the touchscreen of a handheld field device, displaying a graphical user interface with orientation selection fields having orientation indicators;
Fig. 4 shows the touchscreen of a handheld field device, displaying a graphical user interface with a first embodiment of the vector selection element;
Fig. 5 shows a detailed view of the first embodiment of the vector selection element;
Fig. 6a shows the touchscreen of a handheld field device, displaying a graphical user interface with a second embodiment of the vector selection element;
Fig. 6b shows the touchscreen of a handheld field device, displaying a graphical user interface with a third embodiment of the vector selection element;
Fig. 6c shows the touchscreen of a handheld field device, displaying a graphical user interface with a fourth embodiment of the vector selection element; and
Figs. 7a-l show the touchscreen of a handheld field device, displaying a graphical user interface, and illustrate an exemplary procedure for blueprint data entry using the first embodiment of the vector selection element.

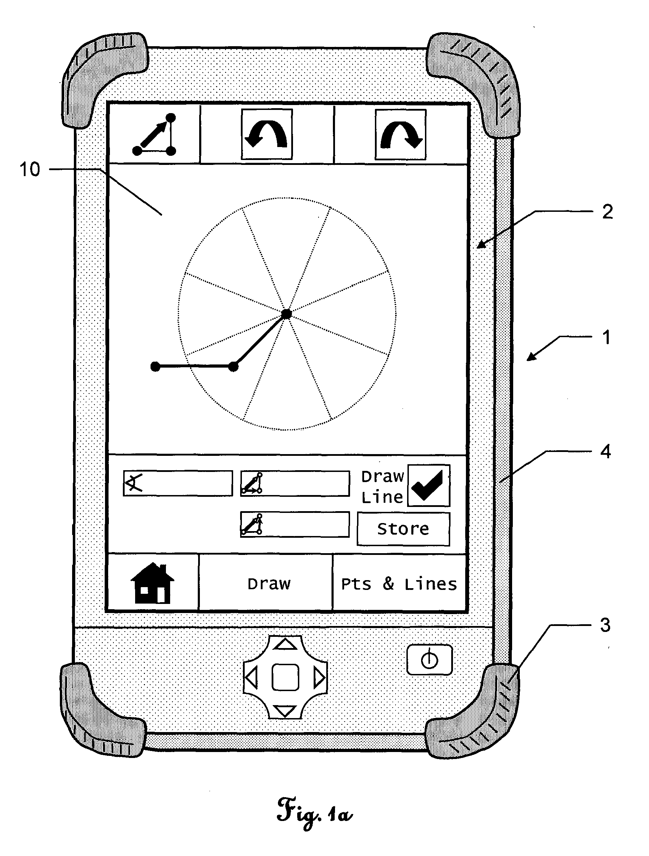

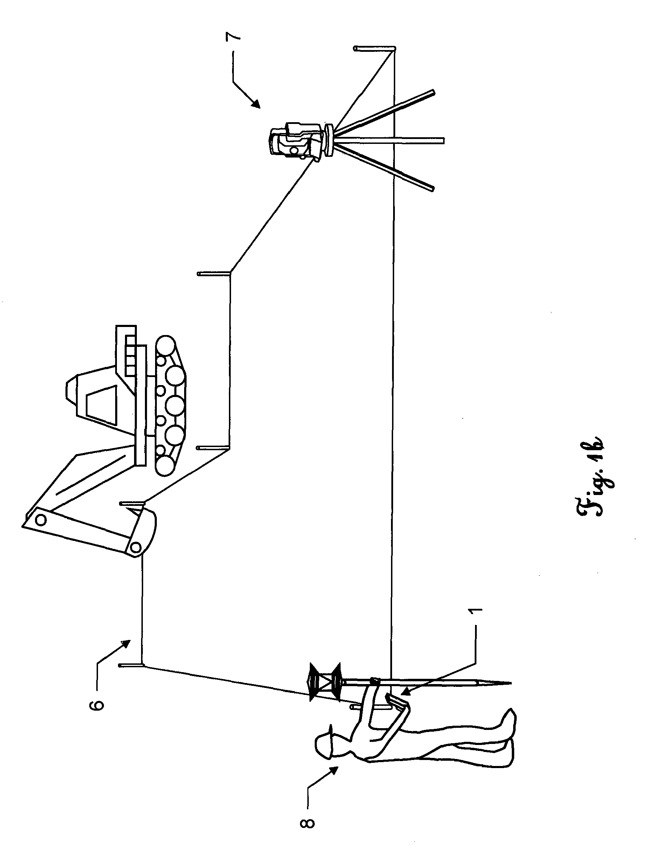

Figures 1a and 1b show a handheld field device 1 according to the invention. Figure 1a shows a detailed view of the device, and Figure 1b shows the device being used by a user 8 on a construction site 6.

The handheld field device 1 comprises a graphical user interface 2 and input means, both preferably being provided by means of a touchscreen. For the sketching functionality of the device the graphical user interface 2 provides a sketching area 10. As the device is designed for outdoor application use with measuring and/or surveying equipment 7 in the field, particularly on construction sites 6, it is advantageous that the handheld field device 1 is sturdy and resistant to wetness and dust. For improved sturdiness the handheld field device 1 is, therefore, equipped with impact-absorbing protectors 3 on its edges, a splash-proof and dust-proof housing 4, and electronic components that are shock-resistant to a certain degree.

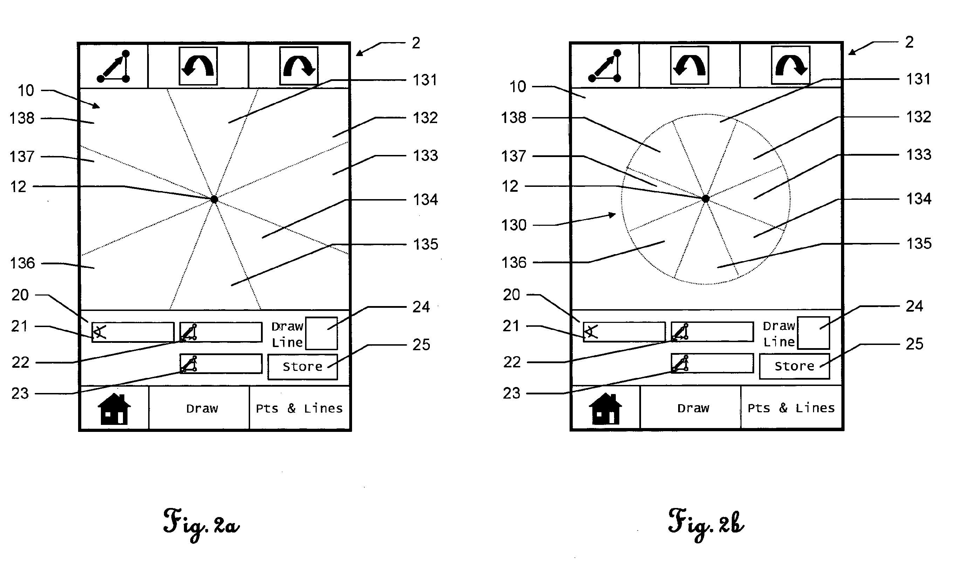

Figures 2a-d show exemplary embodiments of the graphical user interface 2 of the sketching functionality on the touchscreen of the handheld field device 1, the sketching area 10 comprising an orientation selection area with a number of orientation selection fields. The orientation selection area and fields are drawn with broken lines and are not necessarily displayed to the user.

Below the sketching area 10 of the graphical user interface 2 a first input menu 20 is provided. The menu comprises a draw line box 24, a store key 25 and three value input fields: an angle input field 21, a first distance input field 22 and a second distance input field 23. The draw line box 24 can be ticked to draw a line segment when moving to a destination point, or un-ticked to move to a destination point without drawing a line. Into the value input fields a user can enter values for angles and/or distances for a new line segment. The angle input field 21 thus allows a user to select non-predefined orientations. The store key 25 is used to verify an entry and store a line segment and/or destination point.

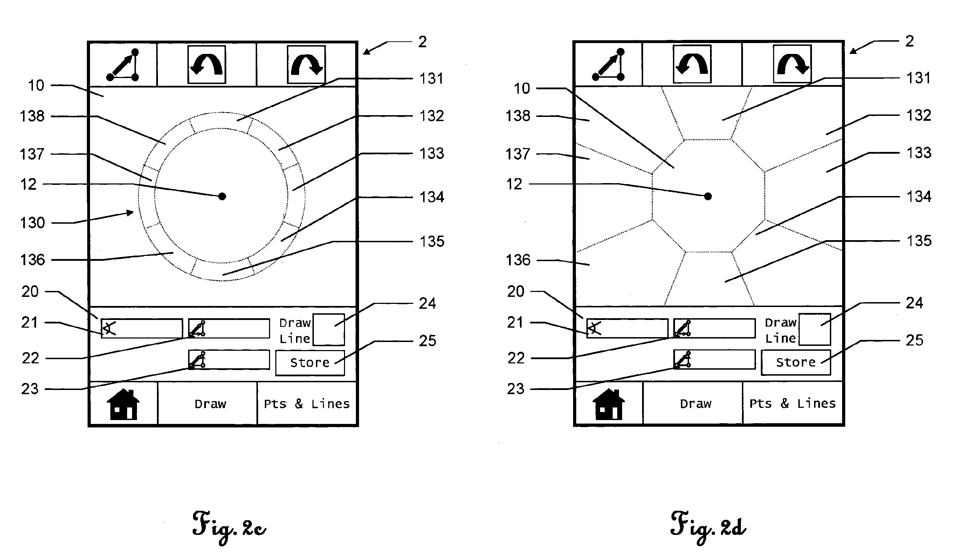

In Figure 2a the orientation selection area fills the whole sketching area 10 of the graphical user interface 2, eight orientation selection fields 131-138 being grouped around the selected point 12. In Figure 2b the orientation selection area 130 has the shape of a circle, eight circular sectors forming the orientation selection fields 131-138. In Figure 2c the orientation selection area 130 has the shape of a ring around the selected point 12.

There are many other shapes perceivable for the orientation selection area, for instance polygons. In Figure 2d the orientation selection area is positioned along the outer borders of the sketching area 10 of the graphical user interface 2, omitting an octagonal centre around the selected point 12.

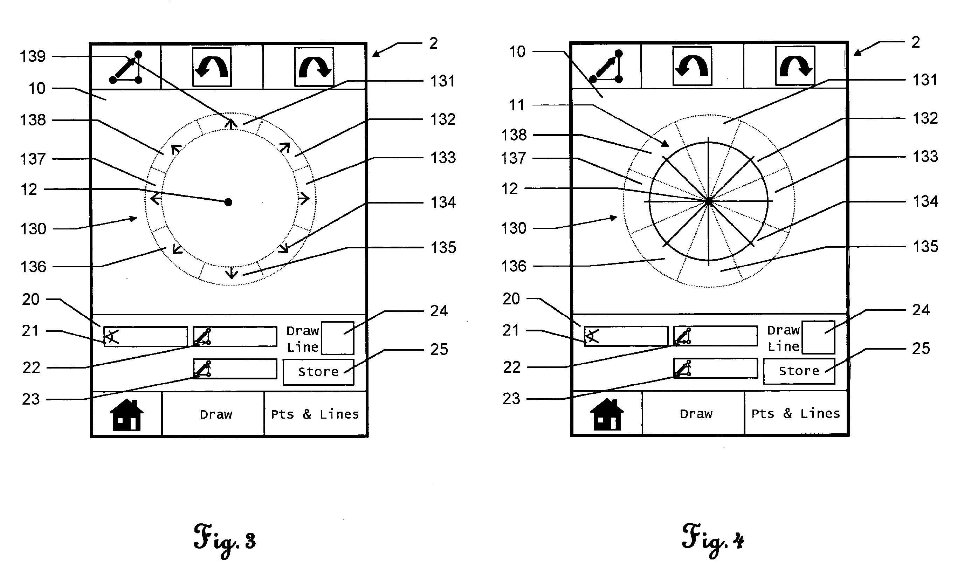

Figures 3 and 4 present two exemplary solutions for indication of the selectable orientations, if the orientation selection fields themselves are not displayed.

In Figure 3 each of the orientation selection fields 131-138 is marked with an orientation indicator 139 shaped as an arrow. This arrow is displayed on the graphical user interface 2 to indicate to the user the position of an orientation selection field and the selectable orientation.

In Figure 4 a vector selection element 11 is displayed in the sketching area 10 of the graphical user interface 2 within a circular shaped orientation selection area 130. The vectors of the vector selection element 11 indicate to the user the position of an orientation selection element.

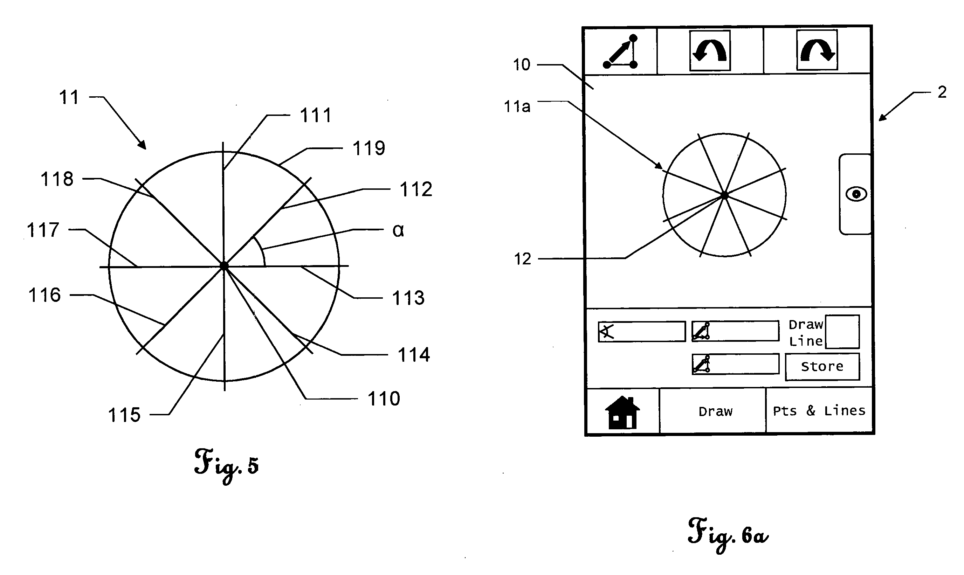

In Figure 5 the vector selection element 11 of Figure 4, which is displayable on the graphical user interface, is illustrated in detail. It comprises a set of vectors, the number of vectors 111-118 equalling the number of orientation selection fields (not shown). In this example there is a set of eight vectors 111-118, all vectors being distributed evenly around the centre 110 with an angle α between them. Around the centre 110, optionally, a circle 119 is drawn, roughly indicating the size of the orientation selection area to the user. If the centre 110 is positioned on the selected point, each of the vectors 111-118 represents one vector selection field. Thus, in this example there are eight circular sector shaped vector selection fields, each arranged around one of the vectors 111-118.

Figures 6a-c show the graphical user interface 2 of the handheld field device 1 from Figure 4 displaying alternative vector selection elements. Preferably, these alternative vector selection elements can be chosen from a pre-stored set of vector selection elements or defined by a user and stored in a memory of the handheld field device 1. The orientation selection fields are not shown in these figures for clarity reasons.

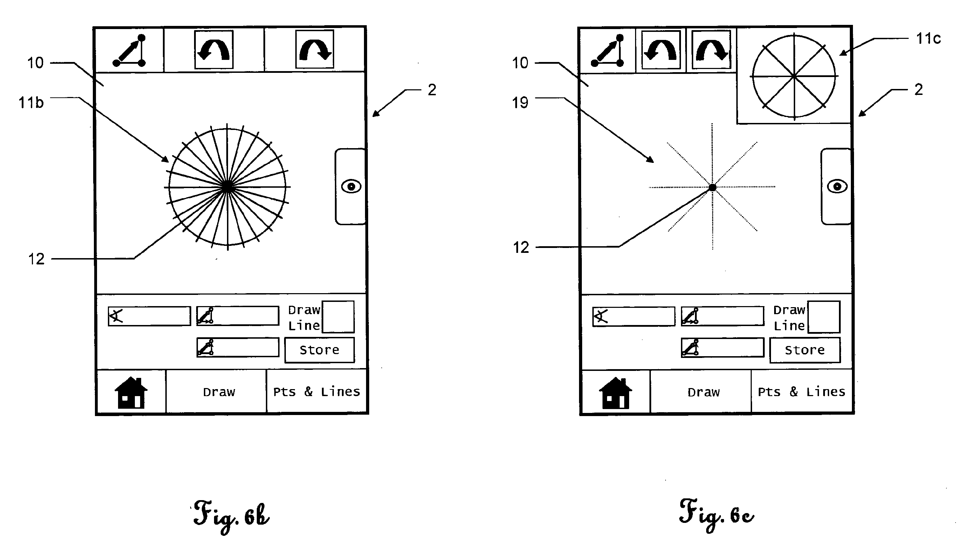

In Figure 6a a second embodiment of the vector selection element 11a is shown. Compared to the first embodiment, the vectors of the vector selection element 11a have been rotated around the centre about 22.5°. Figure 6b shows a third exemplary embodiment of the vector selection element 11b, comprising twenty-four vectors. For easy operability, a vector selection element should not comprise too many vectors, though, as otherwise on a small screen of a handheld field device 1 the vector selection fields become very narrow and thus difficult to click or tap on. Preferable numbers of vectors of a vector selection element are particularly four, eight or twelve. These are sufficient for most applications.

Figure 6c shows a third embodiment of the vector selection element 11c. In this embodiment, around the selected point 12 the set of vectors is not displayed, as the vector selection element 11c is not placed on the selected point but outside the sketching area 10 in an operation field of its own. A virtual set of vectors 19 (drawn with broken lines) is situated around the selected point 12 without being displayed. By selecting one vector in the vector selection element 11c the corresponding vector of the virtual set 19 or an indicating arrow on this vector will be displayed on the graphical user interface 2.

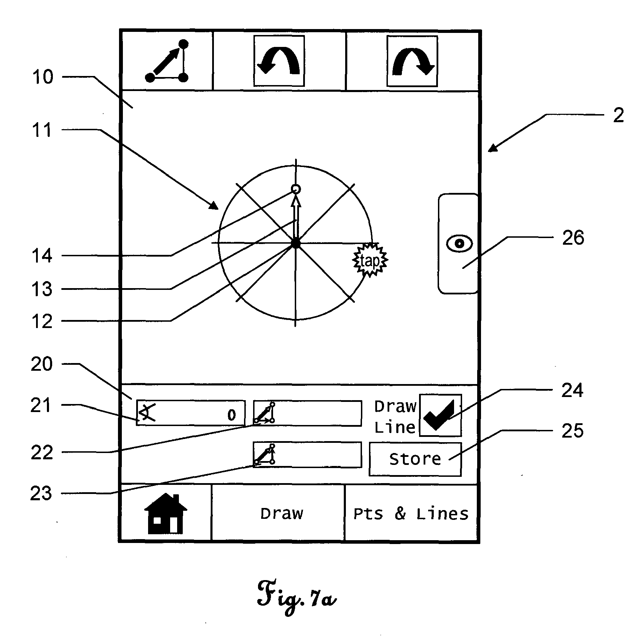

In Figures 7a-l an exemplary procedure for the entry of blueprint data into a preferred embodiment of the handheld field device 1 according to the invention is illustrated. This embodiment of the handheld field device 1 is equipped with a touchscreen and is adapted to display a graphical user interface 2 with a vector selection element 11. The touchscreen allows a user to control the sketching functionality of the handheld field device 1 by tapping with his finger on the surface of the screen, thus selecting data entry fields of the graphical user interface 2. An optional tool box icon 26 is displayed next to the sketching area 10. Selecting this icon opens a tool box menu (not shown) comprising functions that enable a user to define characteristics of the vector selection element 11, for example the number of vectors, and to select a starting point. Also, other functions, such as a zoom in and out utility, can be enclosed in this menu.

Figure 7a shows the graphical user interface 2 of the sketching functionality displayed on the touchscreen after a starting point 12 has been selected by a user. A vector selection element 11 is situated centrally on a selected point 12 in the sketching area 10. The directional arrow 13 points from the selected point 12 towards a destination point 14 in the direction of one of the vectors - here it is the vector pointing to 0°, i.e. upwards. In order to change the arrow's direction the user taps on an orientation selection field, i.e. on or near any of the vectors displayed.

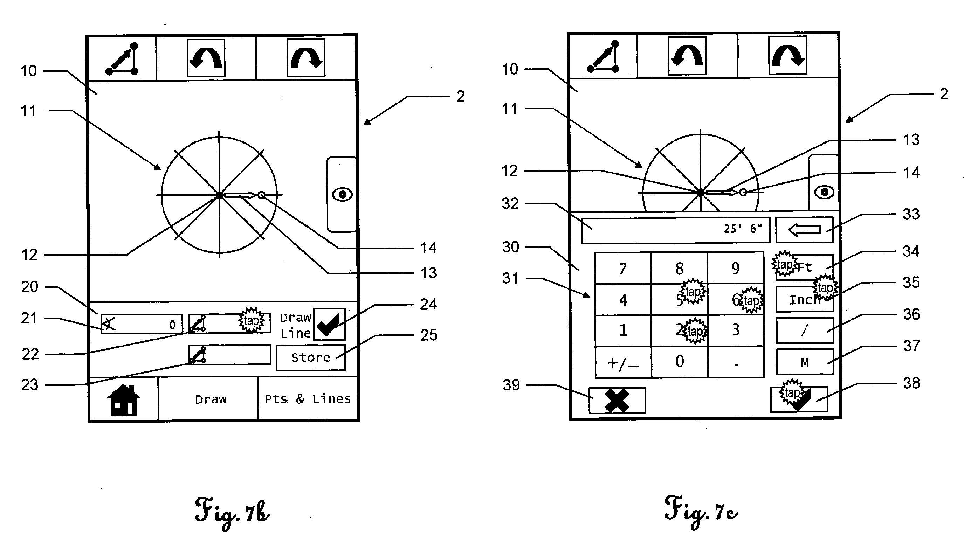

In Figure 7b the directional arrow 13 has changed its direction due to the user's action illustrated in Figure 7a. With a tap of the user on the vector selection element 11 an orientation selection field is selected and the corresponding vector is marked - here it is the vector pointing to 90°, i.e. to the right. The destination point 14 now has the wanted orientation. In order to change the distance of the destination point 14 from the starting point 12 the user taps on the distance input field 22 of the input elements 20 to have a second input menu 30 displayed.

In Figure 7c the second input menu 30 is displayed due to the user's action illustrated in Figure 7b. The second input menu 30 comprises a keypad 31 for the entry of digits, a character display field 32 for the display of entered digits and units, a delete key 33, four unit keys 34-37, an accept key 38 and a cancel key 39.

By tapping on the keypad 31 and unit keys 34,35 the user enters digits and units of a wanted distance into the character display field 32. Tapping on the accept key 38 saves the distance entry and closes the input elements menu 30.

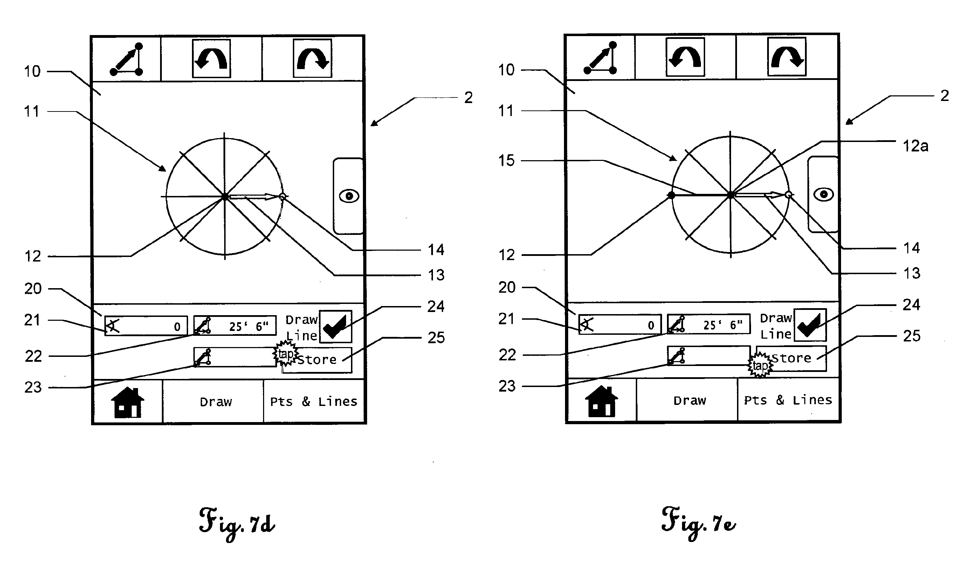

In Figure 7d the input distance value is now displayed in distance input field 22. The length of the directional arrow 13 has changed according to the input distance value, and the destination point 14 now has the desired orientation and distance from starting point 12. As the draw line box 24 is already ticked and the user wants to draw a first line segment 15 to the destination point 14, the user only has to tap on the store key 25.

In Figure 7e a first line segment 15 is displayed. The vector selection element 11 is centred on the new starting point 12a. The directional arrow 13 still has the length and orientation from Figure 7d. In order to draw another line segment 15a having the same orientation and length the user simply taps on the store key 25 again. Optionally, for drawing more than one line segment 15a having the same orientation and length in a row, an additional multiplication button or menu could be provided. For instance, next to the store key 25 two additional keys labelled "2×" and "3×" (not shown) could be provided for drawing two or three line segments at a time. This would allow the user to create a multitude of line segments 15 having the same orientation and length with a single tap, thus further decreasing the number of necessary taps.

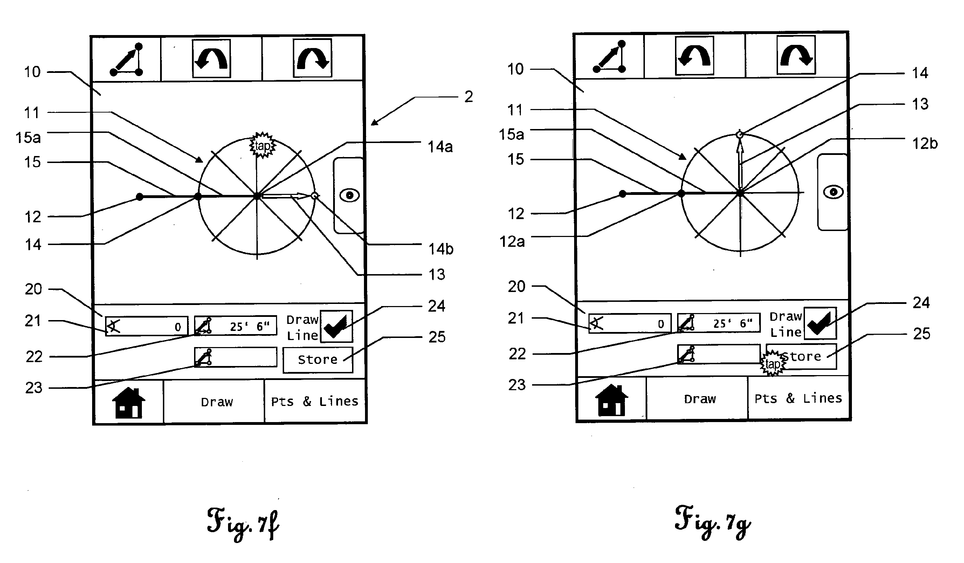

In Figure 7f a second line segment 15a is displayed additionally. The vector selection element 11 is centred on the new starting point 12b. The directional arrow 13 still has the length and orientation from Figure 7e. In order to change the orientation of the directional arrow 13 the user taps on or near one of the vectors of the vector selection element 11, thus selecting an orientation selection field.

In Figure 7g the directional arrow 13 has changed its direction due to the user's action illustrated in Figure 7f. The destination point 14 now has the desired orientation. In order to draw another line segment 15c having the same length and the new orientation the user taps on the store key 25.

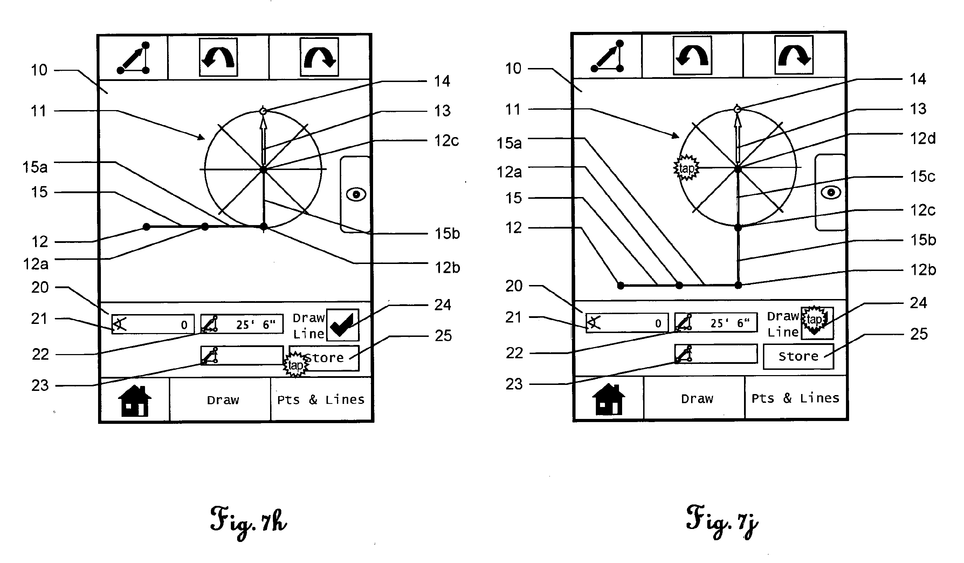

In Figure 7h a third line segment 15b is displayed additionally. The vector selection element 11 is centred on the new starting point 12c. The directional arrow 13 still has the length and orientation from Figure 7g. In order to draw another line segment 15a having the same orientation and length the user simply taps on the store key 25 again.

In Figure 7j a fourth line segment 15c is displayed additionally. The vector selection element 11 is centred on the new starting point 12d. The directional arrow 13 still has the length and orientation from Figure 7h. In order to change the orientation of the directional arrow 13 the user taps on or near one of the vectors of the vector selection element 11. In order to only create a new point without a connection by a line segment the user taps on the draw line box 24, thus removing the tick mark from the box.

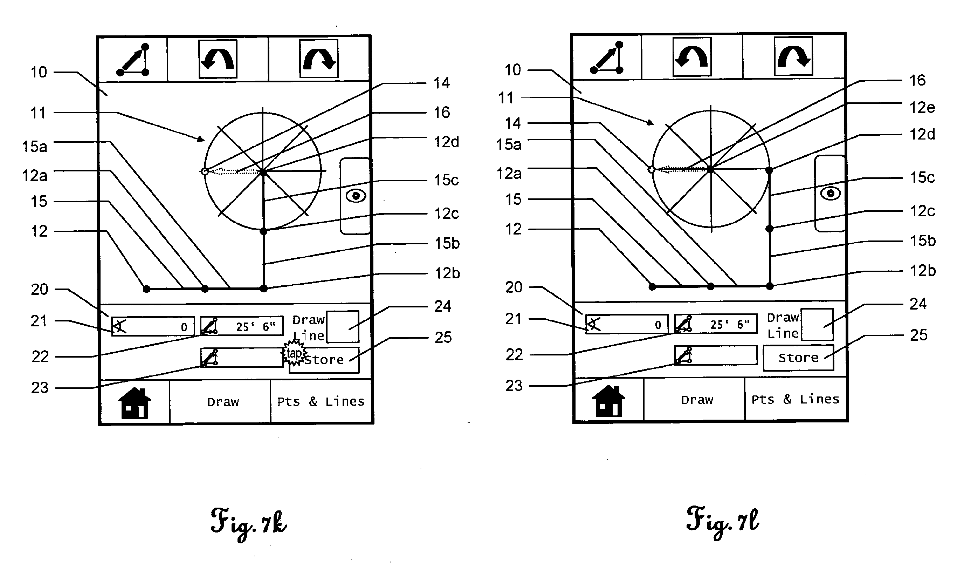

In Figure 7k the directional arrow 16 has changed its colour and direction due to the user's action illustrated in Figure 7j. The changed colour (here represented by broken lines) is an effect of the removed mark in the draw line box 24 and signalizes the user that no line segment will be drawn. In order to create a new point at the destination point 14 without connection by a line segment the user taps on the store key 25.

In Figure 7l the vector selection element 11 is centred on the new starting point 12e, which is not connected to point 12d by a line. The user can now continue to create a new starting point at the destination point 14, draw a further line segment to, or change the orientation or distance of that point using the sketching functionality described above.

Although the invention is illustrated above, partly with reference to some preferred embodiments, it must be understood that numerous modifications and combinations of different features of the embodiments can be made within the scope of the invention, as defined in the appended claims.

## Claims

1. Handheld field device (1) for use with outdoor application equipment (7) for measuring and/or surveying, adapted for entry and display of blueprint data, comprising
• a graphical user interface (2) adapted to provide line segment data entry fields and to display input line segments (15) and
• storing and calculation means adapted to accept, store and edit line segment data associated with said input line segments (15),
wherein the line segment data comprises a starting point (12), an orientation and a length of each line segment (15),
**characterized in that**
• the storing and calculation means are adapted to store a multitude of defined orientations, in particular between four and twenty-four orientations, and
• the graphical user interface (2) has a defined orientation selection area (130), comprising a multitude of orientation selection fields (131-138) for entry of an orientation of a line segment (15), wherein each of the orientation selection fields (131-138) is assigned to one of the defined orientations.

2. Handheld field device (1) according to Claim 1,
**characterized in that**
• the graphical user interface (2) provides a sketching area (10) for displaying input line segments (15), and the orientation selection area (130) is provided in the sketching area (10), in particular covering the whole sketching area (10),
• each orientation selection field (131-138) comprises a multitude of selectable display points for entry of an orientation of a line segment (15), and/or
• the graphical user interface (2) is adapted to display a line segment (15) having the entered orientation or a directional arrow (13) indicating the entered orientation after an entry of an orientation.

3. Handheld field device (1) according to Claim 1 or 2,
**characterized in that**
the orientation selection area (130) on the graphical user interface (2)
• has the shape of a circle, a circular ring or a polygon, in particular a rectangle or an octagon, and/or
• is centred on the starting point (12).

4. Handheld field device (1) according to any of the preceding claims,
**characterized in that**
on the graphical user interface (2) the orientation selection fields (131-138) are
• grouped around the starting point (12),
• centred on the starting point (12), and/or
• separated by straight lines radiating from the starting point (12).

5. Handheld field device (1) according to any of the preceding claims,
**characterized in that**
the graphical user interface (2) is
• designed, at least partially, as a touchscreen, providing input means for entry of line segment data, and/or
• adapted to display
• the starting point (12),
• the orientation selection area (130),
• the orientation selection fields (131-138), and/or
• orientation indicators (139) representing the orientation selection fields (131-138).

6. Handheld field device (1) according to any of the preceding claims,
**characterized in that**
• number and/or angle of the orientations,
• size and/or shape of the orientation selection fields (131-138), and/or
• size and/or shape of displayed orientation indicators (139)
are selectable and/or variable by an input of a user (8).

7. Handheld field device (1) according to any of the preceding claims,
**characterized in that**
• the graphical user interface (2) is adapted to provide a vector selection element (11), which provides at least four vectors (111-118) of different defined orientation that have a common starting point (110), and
• each of the orientation selection fields (131-138) is assigned to the orientation of one of the vectors (111-118).

8. Handheld field device (1) according to Claim 7,
**characterized in that**
the vector selection element (11)
• comprises at least eight vectors (111-118), and/or
• is centred on the starting point (12), particularly in such a way that the common starting point (12) of the vectors (111-118) is centred on the starting point (12).

9. Handheld field device (1) according to Claim 7 or Claim 8,
**characterized in that**
• the angles (α) between two neighbouring vectors of the set of vectors (111-118) of the vector selection element (11) are distributed evenly, and/or
• the number and orientation of the vectors (111-118) of the vector selection element (11) are selectable and/or variable by an input of a user (8).

10. Handheld field device (1) according to any of Claims 7 to 9,
**characterized in that**
the graphical user interface (2) is adapted to display the vector selection element (11) and/or the vectors (111-118).

11. Handheld field device (1) according to any of the preceding claims,
**characterized by**
being designed and adapted for field use on construction sites (6), having shock-proof components and a sturdy casing (4) with
• impact-absorbing protectors (3);
• a splash-proof and/or dust-proof surface; and/or
• an anti-scratch display protection.

12. Method for entering blueprint data into a handheld field device (1), in particular according to any of Claims 1 to 11, the device being designed for use with outdoor application equipment (7) for measuring and/or surveying, and for entry and display of blueprint data, with the steps of
• entering a length for a line segment (15),
• entering an orientation for a line segment (15),
**characterized by**
• defining a multitude of orientations,
• providing an orientation selection area (130) with a multitude of orientation selection fields (131-139), each of which being assigned to one of the defined orientations, and
• entering an orientation for a line segment (15) by selecting one out of the multitude of orientation selection fields (131-138).

13. Method according to Claim 12,
**characterized in that**
• the orientation selection area (130) is provided in a sketching area (10) of a graphical user interface (2), the sketching area (10) being adapted for displaying input line segments (15),
• each orientation selection field (131-138) comprises a multitude of selectable display points for entry of an orientation of a line segment (15), and selecting an orientation selection field (131-138) comprises the step of selecting a display point, and
• on the graphical user interface (2) a line segment (15) having the entered orientation or a directional arrow (13) indicating the entered orientation is displayed after the entry of an orientation.

14. Method according to Claim 12 or Claim 13, **characterized in that**
entering an orientation for a line segment (15) comprises the step of selecting one vector out of a set of vectors (111-118), wherein
• the set of vectors (111-118) is displayed on a graphical user interface (2),
• the vectors (111-118) have a common starting point (110) and define a vector selection area (119),
• the vector selection area (119) is divided into vector selection fields, each of which being assigned to one of the vectors (111-118), and
• each vector selection field has the function of a line segment data entry field for entry of an orientation of a line segment (15).

15. Computer programme product, having computer-executable instructions for performing the method of one of the claims 12 to 14, in particular when run on a storing and calculation means of a handheld field device (1) according to one of the claims 1 to 11.

## Patentansprüche

1. Tragbare Feldvorrichtung (1) zur Verwendung mit einer im Freien anwendbaren Ausrüstung (7) zum Messen und/oder Vermessen, geeignet zum Eintragen und Anzeigen von Plandaten, umfassend
• eine grafische Benutzeroberfläche (2), geeignet zur Bereitstellung von Streckendaten-Eingabefeldern und zum Anzeigen eingegebener Strecken (15) und
• Speicherungs- und Berechnungsmittel, geeignet zum Annehmen, Speichern und Bearbeiten von Streckendaten in Verbindung mit den eingegebenen Strecken (15),
wobei die Streckendaten einen Anfangspunkt (12), eine Ausrichtung und eine Länge jeder Strecke (15) umfassen,
**dadurch gekennzeichnet, dass**
• die Speicherungs- und Berechnungsmittel dazu geeignet sind, eine Mehrzahl von definierten Ausrichtungen zu speichern, insbesondere zwischen vier und vierundzwanzig Ausrichtungen, und
• die grafische Benutzeroberfläche (2) eine definierte Ausrichtungswahlfläche (130) aufweist, die eine Mehrzahl von Ausrichtungswahlfeldern (131-138) zum Eintragen einer Ausrichtung einer Strecke (15) umfasst, wobei jedes der Ausrichtungswahlfelder (131-138) einer der definierten Ausrichtungen zugeordnet ist.

2. Tragbare Feldvorrichtung (1) gemäß Anspruch 1,
**dadurch gekennzeichnet, dass**
• die grafische Benutzeroberfläche (2) eine Skizzierfläche (10) zum Anzeigen eingegebener Strecken (15) bereitstellt und die Ausrichtungswahlfläche (130) in der Skizzierfläche (10) vorgesehen ist und insbesondere die gesamte Skizzierfläche (10) abdeckt,
• jedes Ausrichtungswahlfeld (131-138) eine Mehrzahl wählbarer Anzeigepunkte zum Eingeben einer Ausrichtung einer Strecke (15) umfasst, und/oder
• die grafische Benutzeroberfläche (2) dazu geeignet ist, eine Strecke (15) mit der eingegebenen Ausrichtung oder einen Richtungspfeil (13) anzuzeigen, der die eingegebene Ausrichtung nach dem Eintragen einer Ausrichtung anzeigt.

3. Tragbare Feldvorrichtung (1) gemäß Anspruch 1 oder 2,
**dadurch gekennzeichnet, dass**
die Ausrichtungswahlfläche (130) auf der grafischen Benutzeroberfläche (2)
• die Form eines Kreises, eines kreisförmigen Ringes oder eines Vielecks, insbesondere eines Rechtecks oder eines Achtecks, aufweist, und/oder
• am Anfangspunkt (12) zentriert ist.

4. Tragbare Feldvorrichtung (1) gemäß einem der vorangehenden Ansprüche,
**dadurch gekennzeichnet, dass**
auf der grafischen Benutzeroberfläche (2) die Ausrichtungswahlfelder (131-138)
• um den Anfangspunkt (12) gruppiert,
• am Anfangspunkt (12) zentriert und/oder
• durch gerade Linien, die von Anfangspunkt (12) wegführen, getrennt sind.

5. Tragbare Feldvorrichtung (1) gemäß einem der vorangehenden Ansprüche,
**dadurch gekennzeichnet, dass**
die grafische Benutzeroberfläche (2)
• zumindest teilweise als Touchscreen ausgeführt ist, der Eingabemittel zum Eingeben von Streckendaten bereitstellt, und/oder
• geeignet ist,
○ den Anfangspunkt (12),
○ die Ausrichtungswahlfläche (130),
○ die Ausrichtungswahlfelder (131-138) und/oder
○ Ausrichtungsanzeiger (139), welche die Ausrichtungswahlfelder (131-138) darstellen,
anzuzeigen.

6. Tragbare Feldvorrichtung (1) gemäß einem der vorangehenden Ansprüche,
**dadurch gekennzeichnet, dass**
• die Anzahl und/oder der Winkel der Ausrichtungen,
• die Größe und/oder die Form er Ausrichtungswahlfelder (131-138) und/oder
• die Größe und/oder die Form von angezeigten Ausrichtungsanzeigern (139) durch die Eingabe eines Benutzers (8) auswählbar und/oder variabel sind.

7. Tragbare Feldvorrichtung (1) gemäß einem der vorangehenden Ansprüche,
**dadurch gekennzeichnet, dass**
• die grafische Benutzeroberfläche (2) dazu geeignet ist, ein Vektorauswahlelement (11) bereitzustellen, das mindestens vier Vektoren (111-118) unterschiedlicher definierter Ausrichtungen bereitstellt, die einen gemeinsamen Anfangspunkt (110) aufweisen, und
• jedes der Ausrichtungswahlfelder (131-138) der Ausrichtung eines der Vektoren (111-118) zugeordnet ist.

8. Tragbare Feldvorrichtung (1) gemäß Anspruch 7,
**dadurch gekennzeichnet, dass**
das Vektorauswahlelement (11)
• wenigstens acht Vektoren (111-118) umfasst und/oder
• auf dem Anfangspunkt (12) zentriert ist, insbesondere in einer Art, dass der gemeinsame Anfangspunkt (12) der Vektoren (111-118) auf dem Anfangspunkt (12) zentriert ist.

9. Tragbare Feldvorrichtung (1) gemäß Anspruch 7 oder Anspruch 8,
**dadurch gekennzeichnet, dass**
• die Winkel (α) zwischen zwei benachbarten Vektoren der Gruppe der Vektoren (111-118) des Vektorauswahlelements (11) gleichmäßig verteilt sind, und/oder
• die Anzahl und Ausrichtung der Vektoren (111-118) des Vektorauswahlelements (11) durch die Eingabe eines Benutzers (8) auswählbar und/oder variabel sind.

10. Tragbare Feldvorrichtung (1) gemäß einem der Ansprüche 7 bis 9,
**dadurch gekennzeichnet, dass**
die grafische Benutzeroberfläche (2) dazu geeignet ist, das Vektorauswahlelement (11) und/oder die Vektoren (111-118) anzuzeigen.

11. Tragbare Feldvorrichtung (1) gemäß einem der vorangehenden Ansprüche,
**dadurch gekennzeichnet, dass**
sie zur Verwendung im Feld auf Baustellen (6) konstruiert und ausgeführt ist und zu diesem Zweck schlagfeste Komponenten sowie ein robustes Gehäuse (4) aufweist, versehen mit
• stoßdämpfenden Schutzelementen (3);
• einer spritzwasserdichten und/oder staubdichten Oberfläche; und/oder
• einem kratzfesten Anzeigeschutz.

12. Verfahren zum Eingeben von Plandaten in eine tragbare Feldvorrichtung (1), insbesondere gemäß einem der Ansprüche 1 bis 11, wobei die Vorrichtung zur Verwendung mit einer im Freien anwendbaren Ausrüstung (7) zum Messen und/oder Vermessen und zum Eingeben und Anzeigen von Plandaten ausgeführt ist, wobei das Verfahren folgende Schritte umfasst:
• Eingeben einer Länge einer Strecke (15),
• Eingeben einer Ausrichtung einer Strecke (15),
**gekennzeichnet durch**
• die Definition einer Mehrzahl von Ausrichtungen
• die Bereitstellung einer Ausrichtungswahlfläche (130) mit einer Mehrzahl von Ausrichtungswahlfeldern (131-139), von denen jedes einer der definierten Ausrichtungen zugeordnet ist, und
• die Eingabe einer Ausrichtung für eine Strecke (15) **durch** Auswählen eines der Mehrzahl von Ausrichtungswahlfeldern (131-138).

13. Verfahren gemäß Anspruch 12,
**dadurch gekennzeichnet, dass**
• die Ausrichtungswahlfläche (130) in einer Skizzierfläche (10) einer grafischen Benutzeroberfläche (2) vorgesehen ist, wobei die Skizzierfläche (10) zur Anzeige eingegebener Strecken (15) geeignet ist,
• jedes Ausrichtungswahlfeld (131-138) eine Mehrzahl auswählbarer Anzeigepunkte zum Eingeben einer Ausrichtung einer Strecke (15) umfasst und die Auswahl eines Ausrichtungswahlfeldes (131-138) den Schritt der Auswahl eines Anzeigepunktes umfasst, und
• auf der grafischen Benutzeroberfläche (2) eine Strecke (15) mit der eingegebenen Ausrichtung oder ein Richtungspfeil (13), der die eingegebene Ausrichtung anzeigt, nach der Eingabe einer Ausrichtung angezeigt wird.

14. Verfahren gemäß Anspruch 12 oder Anspruch 13,
**dadurch gekennzeichnet, dass**
das Eingeben einer Ausrichtung für eine Strecke (15) den Schritt der Auswahl eines Vektors aus einer Gruppe von Vektoren (111-118) umfasst, wobei
• die Gruppe von Vektoren (111-118) auf einer grafischen Benutzeroberfläche (2) angezeigt wird,
• die Vektoren (111-118) einen gemeinsamen Anfangspunkt (110) aufweisen und eine Vektorwahlfläche (119) begrenzen,
• die Vektorwahlfläche (119) in Vektorwahlfelder unterteilt ist, deren jedes einem der Vektoren (111-118) zugeordnet ist, und
• jedes Vektorwahlfeld die Funktion eines Streckendateneingabefeldes zum Eingeben einer Ausrichtung einer Strecke (15) wahrnimmt.

15. Computerprogrammprodukt mit Computer-ausführbaren Befehlen zur Durchführung des Verfahrens eines der Ansprüche 12 bis 14, insbesondere wenn dieses auf einem Speicher- und Berechnungsmittel einer tragbaren Feldvorrichtung (1) gemäß einem der Ansprüche 1 bis 11 ausgeführt wird.

## Revendications

1. Dispositif de terrain portable (1) pour l'utilisation avec du matériel d'application à l'extérieur (7) pour mesurer et/ou arpenter, adapté pour entrer et afficher des données de plans, comprenant
• une interface utilisateur graphique (2) adaptée pour fournir des champs d'entrée de données de segment de ligne et pour afficher des segments de ligne d'entrée (15) et
• des moyens de stockage et de calcul adaptés pour accepter, stocker et éditer des données de segment de ligne associées aux segments de ligne d'entrée mentionnés (15),
dans lequel les données de segment de ligne comprennent un point de départ (12), une orientation et une longueur de chaque segment de ligne (15),
**caractérisé en ce que**
• les moyens de stockage et de calcul sont adaptés pour stocker une multitude d'orientations définies, en particulier entre quatre et vingt-quatre orientations et
• l'interface utilisateur graphique (2) a une zone de sélection d'orientation définie (130) qui comprend une multitude de champs de sélection d'orientation (131-138) pour entrer une orientation d'un segment de ligne (15), dans laquelle chacun des champs de sélection d'orientation (131-138) est assigné à l'une des orientations définies.

2. Dispositif de terrain portable (1) selon la revendication 1,
**caractérisé en ce que**
• l'interface utilisateur graphique (2) fournit une zone de dessin (10) pour afficher des segments de ligne d'entrée (15) et la zone de sélection d'orientation (130) est prévue dans la zone de dessin (10), en particulier elle couvre toute la zone de dessin (10),
• chaque champ de sélection d'orientation (131-138) comprend une multitude de points d'affichage sélectionnables pour l'entrée d'une orientation d'un segment de ligne (15) et/ou
• l'interface utilisateur graphique (2) est adaptée pour afficher un segment de ligne (15) ayant l'orientation entrée ou une flèche directionnelle (13) qui indique l'orientation entrée après l'entrée d'une orientation.

3. Dispositif de terrain portable (1) selon la revendication 1 ou 2,
**caractérisé en ce que**
la zone de sélection d'orientation (130) sur l'interface utilisateur graphique (2)
• a la forme d'un cercle, d'un anneau circulaire ou d'un polygone, en particulier d'un rectangle ou d'un octogone et/ou
• est centrée sur le point de départ (12).

4. Dispositif de terrain portable (1) selon l'une quelconque des revendications précédentes,
**caractérisé en ce que**
les champs de sélection d'orientation (131-138) sont
• groupés autour du point de départ (12),
• centrés sur le point de départ (12) et/ou
• séparés par des lignes droites qui rayonnent à partir du point de départ (11) sur l'interface utilisateur graphique (2).

5. Dispositif de terrain portable (1) selon l'une quelconque des revendications précédentes,
**caractérisé en ce que**
l'interface utilisateur graphique (2) est
• conçue, au moins partiellement, comme un écran tactile, fournissant des moyens d'entrée des données de segment de ligne et/ou
• adaptée pour afficher
• le point de départ (12),
• la zone de sélection d'orientation (130),
• les champs de sélection d'orientation (131-138) et/ou
• des indicateurs d'orientation (139) qui représentent les champs de sélection d'orientation (131-138).

6. Dispositif de terrain portable (1) selon l'une quelconque des revendications précédentes,
**caractérisé en ce que**
• le nombre et/ou l'angle des orientations,
• la taille et/ou la forme des champs de sélection d'orientation (131-138) et/ou
• la taille et/ou la forme des indicateurs d'orientation affichés (139) sont sélectionnables et/ou variables par une entrée d'un utilisateur (8).

7. Dispositif de terrain portable (1) selon l'une quelconque des revendications précédentes,
**caractérisé en ce que**
• l'interface utilisateur graphique (2) est adaptée pour fournir un élément de sélection de vecteur (11) qui fournit au moins quatre vecteurs (111-118) de différente orientation définie qui ont un point de départ commun (110) et
• chacun des champs de sélection d'orientation (131-138) est assigné à l'orientation de l'un des vecteurs (111-118).

8. Dispositif de terrain portable (1) selon la revendication 7,
**caractérisé en ce que**
l'élément de sélection de vecteur (11)
• comprend au moins huit vecteurs (111-118) et/ou
• est centré sur le point de départ (12), particulièrement de telle manière que le point de départ commun (12) des vecteurs (111-118) est centré sur le point de départ (12).

9. Dispositif de terrain portable (1) selon la revendication 7 ou la revendication 8,
**caractérisé en ce que**
• les angles (α) entre deux vecteurs voisins de l'ensemble de vecteurs (111-118) de l'élément de sélection de vecteur (11) sont répartis uniformément et/ou
• le nombre et l'orientation des vecteurs (111-118) de l'élément de sélection de vecteur (11) sont sélectionnables et/ou variables par une entrée d'un utilisateur (8).

10. Dispositif de terrain portable (1) selon l'une quelconque des revendications 7 à 9,
**caractérisé en ce que**
l'interface utilisateur graphique (2) est adaptée pour afficher l'élément de sélection de vecteur (11) et/ou les vecteurs (111-118).

11. Dispositif de terrain portable (1) selon l'une quelconque des revendications précédentes,
**caractérisé par** le fait d'être conçu et adapté à l'utilisation sur le terrain sur des chantiers (6), ayant des composants résistants aux chocs et un boîtier robuste (4) avec
• des protecteurs absorbant les chocs (3),
• une surface étanche aux éclaboussures et/ou à la poussière et/ou
• une protection d'affichage anti-rayures.

12. Procédé pour entrer des données de plans dans un dispositif de terrain portable (1), en particulier selon l'une quelconque des revendications 1 à 11, le dispositif étant conçu pour l'utilisation avec du matériel d'application à l'extérieur (7) pour mesurer et/ou arpenter, adapté pour entrer et afficher des données de plans, avec les étapes
• d'entrer une longueur pour un segment de ligne (15),
• d'entrer une orientation pour un segment de ligne (15),
**caractérisé par**
• la définition d'une multitude d'orientations,
• le fait de fournir une zone de sélection d'orientation (130) avec une multitude de champs de sélection d'orientation (131-138), chacun d'entre eux étant assigné à l'une des orientations définies et
• le fait d'entrer une orientation pour un segment de ligne (15) en sélectionnant un des champs de la multitude de champs de sélection d'orientation (131-138).

13. Procédé selon la revendication 12,
**caractérisé en ce que**
• la zone de sélection d'orientation (130) est prévue dans une zone de dessin (10) d'une interface utilisateur graphique (2), la zone de dessin (10) étant adaptée pour afficher des segments de ligne d'entrée (15),
• chaque champ de sélection d'orientation (131-138) comprend une multitude de points d'affichage sélectionnables pour l'entrée d'une orientation d'un segment de ligne (15) et la sélection d'un champ de sélection d'orientation (131-138) comprend l'étape de sélectionner un point d'affichage et
• un segment de ligne (15) ayant l'orientation entrée ou une flèche directionnelle (13) indiquant l'orientation entrée est affiché sur l'interface utilisateur graphique (2) après l'entrée d'une orientation.

14. Procédé selon la revendication 12 ou la revendication 13,
**caractérisé en ce que**
le fait d'entrer une orientation pour un segment de ligne (15) comprend l'étape de sélectionner un vecteur parmi un ensemble de vecteurs (111-118),
• l'ensemble de vecteurs (111-118) étant affiché sur une interface utilisateur graphique (2),
• les vecteurs (111-118) ayant un point de départ commun (110) et définissant une zone de sélection de vecteur (119),
• la zone de sélection de vecteur (119) étant divisée en champs de sélection de vecteur, chacun d'entre eux étant assigné à l'un des vecteurs (111-118) et
• chaque champ de sélection de vecteur ayant la fonction d'un champ d'entrée de données de segment de ligne pour l'entrée d'une orientation d'un segment de ligne (15).

15. Produit programme d'ordinateur ayant des instructions exécutables par ordinateur pour appliquer la méthode de l'une des revendications 12 à 14, en particulier lorsqu'il fonctionne sur un moyen de stockage et de calcul d'un dispositif de terrain portable (1) selon l'une des revendications 1 à 11.
